# EUROPÄISCHE PATENTSCHRIFT

(11) **EP 2 192 059 B1**
(45) Veröffentlichungstag und Bekanntmachung des Hinweises auf die Patenterteilung: **19.06.2013**
(21) Anmeldenummer: 09174099.3
(22) Anmeldetag: 27.10.2009
(51) Int. Cl.: B65G 35/06

(54) **Einrichtung zum Verpacken von Artikeln**
Device for packaging articles
Dispositif d'emballage d'articles

(30) Priorität: 28.11.2008 DE 102008059622
(43) Veröffentlichungstag der Anmeldung: 02.06.2010
(73) Patentinhaber: Krones AG, 93073 Neutraubling (DE)
(72) Erfinder: Hutter, Alban, 83242 Reit im Winkl (DE); Canalicchio, Christian, 83093 Bad Endorf (DE)
(74) Vertreter: Reichert, Werner Franz

(56) Entgegenhaltungen:
- DE-C- 609 213
- FR-A1- 2 607 793
- FR-A1- 2 626 858
- FR-A1- 2 639 039
- US-A- 4 461 379
- US-A- 5 282 529
- US-A- 5 441 380

## Beschreibung

Die vorliegende Erfindung betrifft eine Einrichtung zum Verpacken von Artikeln.

Im Stand der Technik sind diverse Verfahren und Vorrichtungen bekannt, mit denen Artikel in Verpackungen eingefügt werden. Letztendlich gelangen die in die Verpackung eingefügten Artikel zu einer weiteren Verpackungs- bzw. Komissioniermaschine, in der die Artikel zu den verschiedenen Sendungen an den Kunden bereits zusammengestellt werden.

So offenbart das U.S.-Patent 6,032,788 ein Mehrschienentransportsystem für bedruckte Schaltungen. Das System besitzt ein erstes und ein zweites Shuttle, das entlang der Schienen bewegt werden kann. Die Shuttle sind dabei derart ausgebildet, dass sie sich im Wesentlichen parallel zueinander entlang der ersten und zweiten longitudenalen Achse bewegen können. Die Shuttle selbst können selektiv mit den Schienen in Wirkzusammenhang treten.

Das U.S. Patent 5,586,638 offenbart ein mehrere Bahnen umfassendes Fördersystem für Leiterplatten unterschiedlicher Größen. Die Leiterplatten werden innerhalb und/oder zwischen automatischen elektronischen Bauteilen auf Paaren von Schienen transportiert. Auch hier sind die Shuttle derart ausgebildet, dass sie ausgewählt mit den entsprechenden Schienen in Wirkzusammenhang treten können und die Transportbewegung entlang der Schienen ausführen.

Die U.S.-Patentanmeldung 2006/0254886 A1 offenbart ein Fördersystem für Artikel. Das Fördersystem umfasst ein Förderband, das mit einer Transportkette in Bewegung versetzt werden kann. Die Oberfläche des Förderbandes umfasst eine Vielzahl von Platten, die seitlich aneinander angeordnet und für das Tragen der Artikel ausgebildet sind. Jede der Platten ist unabhängig und kann lösbar mit der Transportkette verbunden werden.

Die deutsche Patentanmeldung DE 40 28 207 A1 offenbart ein Transportsystem für die Textilindustrie. Das Transportsystem, bei dem unabhängig voneinander verfahrbare Tragkörper mittels Kupplungsteilen mit schräg umlaufenden Transportbändern in Eingriff bringbar sind, umfasst mehrere Transportbahnen. Das Ein- und Ausschalten der Kupplungsteile erfolgt durch Schaltglieder, die infolge einer Relativbewegung von Schaltglied und Tragkörper beim Anfahren der Tragkörper auf in dem Transportweg der Tragkörper reichende Anschläge und Hindernisse betätigbar sind. Die Tragkörper weisen jeweils einen Adapter zum Anschluss eines auf die Handhabung des zu transportierenden Gutes abgestimmten Handhabungsteils auf.

Die europäische Patentanmeldung EP 1 749 750 A1 offenbart eine Verpackungsmaschine zur Bearbeitung von Einzelportionen aufnehmenden Shuttle. Hierzu ist ein Shuttletransportsystem mit Transportbändern vorgesehen. Ebenso ist ein Shuttlekontrollsystem, eine Ausschubstation für unvollständige Shuttle und eine Korrekturstation für unvollständige Shuttles vorgesehen.

Die europäische Patentschrift EP 0 856 465 B1 offenbart einen entgegengesetzten Tray-Transport bei Pickerstrassen. Bei dem Verfahren werden Einzelprodukte in eine bestimmte Vielzahl von Einzelprodukten aufnehmenden Behältern mittels einer Pickerstrasse eingesetzt. Die Einzelprodukte und die Behälter werden nicht im Gleichstrom herantransportiert. Die Anlieferung des nächsten zu befüllenden Behälters in den Arbeitsbereich der Picker wird gesteuert. Die Einzelprodukte werden unregelmäßig bzw. ungeordnet heran-transportiert. Durch die Produktion der Einzelprodukte wird die Geschwindigkeit der Anlieferung der Einzelprodukte, die Transportgeschwindigkeit der Behälter und/oder die Arbeitsgeschwindigkeit der Picker so gesteuert, dass die den Arbeitsbereich des letzten Pickers verlassenden Behälter gerade vollständig mit den entsprechenden Produkten gefüllt sind.

Das Dokument FR 2 607 793 A1 offenbart einen Kettenförderer, der mindestens eine untere Übertragungsvorrichtung zum Übertragen von Objekten auf die obere Bahn des Kettenförderers umfasst. Zum Übertragen der Objekte auf die untere Bahn (Rücklauf) des Kettenförderers ist mindestens eine obere Übertragungsvorrichtung vorgesehen. Die Objekte befinden sich auf Paletten. Die untere Übertragungsvorrichtung und die obere Übertragungsvorrichtung sind in dem begrenzten Raum zwischen den beiden Bahnen (Ketten) angeordnet. Die Paletten haben einen Vorsprung, mit dem sie beim Transport geführt werden. Ein Verbinden der Paletten mit der Transportspur oder der Kette ist nicht vorgesehen.

Das Dokument US 5,441,380 offenbart eine Vorrichtung zum Bewegen von Ablagen (trays). Die Ablagen werden von einer Ladestation zu einer Entladestation transportiert. Von einem Roboter werden die Ablagen an der Entladestation an eine Verarbeitungseinheit übergeben. Eine parallele Anordnung von mehreren Vorrichtungen zum Transport ist nicht vorgesehen.

Das Dokument FR 2 696 039 offenbart eine Fördervorrichtung mit einer horizontalen Transportspur, die zwei synchrone Antriebsketten umfasst, die parallel in einem Abstand voneinander angeordnet sind und eine geschlossene Schleife bilden. Von den zwei Antriebsketten werden rechteckige Paletten bewegt, die größer als der Abstand der Antriebsketten sind. Zum Überführen einer Palette von der oberen Ebene der Transportspur auf die untere Ebene der Transportspur, wird diese um 90° gedreht und zwischen den Ketten hindurch gehoben. Anschließend wird die Palette wieder um 90° zurückgedreht und auf den beiden Ketten der Transportspur abgesetzt.

Aufgabe der Erfindung ist daher, eine Einrichtung zum Transport von Artikeln in einer Verpackungsmaschine zu schaffen, dass der mindestens eine Transportweg der Fördersysteme und der dem Fördersystem mindestens eine zugeordnete Roboter effizient für den Bearbeitungsprozess genutzt werden.

Die obige Aufgabe wird durch eine Einrichtung zum Transport von Artikeln in einer Verpackungsmaschine gelöst, die die Merkmale des Anspruchs 1 umfasst.

Bei der erfindungsgemäßen Einrichtung zum Transport von Artikeln in einer Verpackungsmaschine hat diese mindestens zwei parallele Fördersysteme für die zu verpackenden Artikel oder die Verpackungen für die zu verpackenden Artikel. Jedes Fördersystem besteht aus einer endlos umlaufenden Transportspur und jedes Fördersystem umfasst einen Anfang und ein Ende. Entlang der mindestens zwei Fördersysteme sind in der Verpackungsmaschine mehrere Bearbeitungsstationen (30) vorgesehen, von denen mindestens einer Bearbeitungsstation ein Roboter zugeordnet ist. Jedes der Fördersysteme trägt mehrere Aufnahmen. Die mehreren Aufnahmen sind mit der jeweiligen Transportspur kraftschlüssig verbindbar, wobei das Fördersystem eine obere Ebene und eine untere Ebene ausgebildet hat. Ebenso hat jedes Fördersystem am Anfang und am Ende eine erste Hubeinheit und eine zweite Hubeinheit zugeordnet. Die erste Hubeinheit und die zweite Hubeinheit sind dafür vorgesehen, die Aufnahmen am Anfang und am Ende des Fördersystems zwischen der oberen Ebene und der unteren Ebene zu verschieben.

Es sind mindestens zwei parallel zueinander angeordnete Fördersysteme der Verpackungsmaschine für die zu verpackenden Artikel vorgesehen. Eine Transportrichtung der mindestens zwei Fördersysteme ist in Bezug auf die obere Ebene abwechselnd gegenläufig. Die beiden Fördersysteme werden abwechselnd getaktet angetrieben, um den mindestens einen Roboter optimal auszunutzen. Der mindestens eine Roboter übergreift die beiden Fördersysteme, so dass er auf beiden Fördersysteme Handhabungen ausführen kann.

Gemäß einer weiteren Ausführungsform der Verpackungsmaschine sind drei Fördersysteme für die zu verpackenden Artikel vorgesehen. Die drei Fördersysteme der Einrichtung sind parallel angeordnet, wobei die Transportrichtung von zwei der Fördersysteme in Bezug auf die obere Ebene gleich gerichtet ist. Das dritte Fördersystem kann eine entgegengesetzte Transportrichtung aufweisen, um zu verarbeitende Gegenstände der Einrichtung zuzuführen. Die beiden Fördersysteme, die die gleiche Förderrichtung aufweisen, werden abwechselnd getaktet angetrieben, um den mindestens einen Roboter optimal auszunutzen. Auch hier übergreift der mindestens eine Roboter mindestens die beiden Fördersysteme, die in gleicher Transportrichtung laufen, so dass er auf beiden Fördersysteme Handhabungen ausführen kann.

Durch die Verschiebung der Aufnahmen von der oberen Ebene zu der unteren Ebene wird erreicht, dass die Aufnahmen in der unteren Ebene zum Anfang des Fördersystems zurücktransportiert werden können. Bei diesem Rücktransport vom Ende des Fördersystems zum Anfang des Fördersystems ist dabei der Transport von Artikeln auf den Aufnahmen vom Anfang des Fördersystems zum Ende des Fördersystems nicht behindert. Die Erfindung hat somit den Vorteil, dass ständig geleerte Aufnahmen am Anfang des Fördersystems für die Aufnahme von neuen Artikeln bzw. Verpackungen zur Verfügung stehen. Dies ermöglicht eine reibungslose Verpackung der Artikel und reduziert somit nicht die Taktzeit der Einrichtung.

Wie bereits oben beschrieben, besitzt das Fördersystem auf der oberen Ebene eine Transportrichtung, die die Aufnahmen vom Anfang zum Ende des Transportsystems hin transportiert. Ebenso hat das Transportsystem auf der unteren Ebene eine entgegengesetzte Transportrichtung ausgebildet, die die Aufnahmen zurück zum Anfang des Fördersystems bringt.

Für den Transport der Aufnahmen ist eine Transportspur vorgesehen, die aus mindestens einer endlosen Kette mit einer Vielzahl von Kettengliederstegen gebildet ist mit der die Aufnahmen während der Bewegung der Transportspur fest verbunden sind. Am Anfang und am Ende des Fördersystems sind die Aufnahmen an die Transportspur ein- bzw. aus der Transportspur entkoppelbar. Beim Einkoppeln der Aufnahmen in die Transportspur werden die Aufnahmen automatisch in Bezug auf die Transportspur ausgerichtet. Die Aufnahmen sind zum Ausrichten und Einkoppeln in die Transportspur mit mindestens jeweils zwei gegenüberliegenden Zahnstangen versehen. Mittels dieser Zahnstangen ist es möglich, eventuelle Toleranzen der Transportspur, die als Kette ausgebildet ist, auszugleichen. Die mit der Zahnstange ebenfalls durchgeführte Klemmung mit der Kette vermeidet, dass eine weitere Zentrierung der Aufnahme in den Bearbeitungsstationen notwendig ist.

Das Fördersystem, auf das die Aufnahmen gelegt werden, läuft mehrere Bearbeitungsstationen an. Diese Bearbeitungsstationen sind parallel zu dem jeweiligen Fördersystem angeordnet.

Der Transport der Aufnahmen durch das Fördersystem ist getaktet. Dadurch ist es möglich, dass die Aufnahmen an den mehreren Bearbeitungsstationen für eine vordefinierte Zeit verweilen. Somit können die den Bearbeitungsstationen zugeordneten Handhabungssysteme, wie z. B. Roboter, die entsprechenden Artikel von den Bearbeitungsstationen auf das Transportsystem umsetzen oder die Artikel von dem Transportsystem in die Bearbeitungsstationen überführen. Für den Fall, dass mehrere Fördersysteme nebeneinander angeordnet sind, ist es ebenfalls denkbar, dass an den Bearbeitungsstationen die Artikel von einem Fördersystem auf das andere übergesetzt werden.

Die Aufnahmen selbst haben mehrere Rastelemente ausgebildet, die in Richtung der oberen Ebene bzw. unteren Ebene des Fördersystems mit der Transportspur bei Bedarf in Wirkzusammenhang bringbar sind. Die Transportspur selbst ist bevorzugt in Form einer Kette ausgebildet. Die Rastelemente sind dabei jeweils sich paarweise gegenüber-stehende Zahnstangen, die je nach Position der Aufnahmen in die Kette eingreifen und sich in Bezug auf die Kettengliederstege der Transportspur ausrichten. Nach der Ausrichtung der Aufnahmen in Bezug auf die Kettengliederstege der Kette erfolgt eine Klemmung und somit eine kraftschlüssige Verbindung zwischen der als Kette ausgebildeten Transportspur. Um eine Ausrichtung zu erreichen ist ein Zahn der Zahnstange schwenkbar ausgebildet. Die bewirkt ebenfalls eine automatische Ausrichtung der Aufnahmen mit den Kettengliederstegen der Transportspur und erleichtert das Einfädeln der Zähne der Zahnstange zwischen die Kettengliederstege. Nachdem Zähne der Zahnstange zwischen den Kettengliederstegen liegen wird Klemmung pneumatisch bewirkt.

Die Klemmung erfolgt wenn die jeweilige Aufnahme in Position mit dem Kettengliederstegen ist, d. h., dass die Zähne der Zahnstange durch die Zwischenräume zwischen den Kettengliederstegen durchgreifen.

Die erfindungsgemäße Einrichtung kann, wie bereits erwähnt, aus mehreren einzelnen Fördersystemen modular aufgebaut sein. In einer bevorzugten Ausführungsform sind drei Fördersysteme parallel zueinander angeordnet, wobei jedes der einzelnen Fördersysteme in der oberen Ebene eine gleichgerichtete Transportrichtung besitzt. Ebenso ist es denkbar, dass die mehreren Fördersysteme jeweils unterschiedliche Transportrichtungen in der oberen Ebene aufweisen können.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung im Verhältnis zu anderen Elementen vergrößert dargestellt sind.

Figur 1 zeigt eine perspektivische Ansicht einer aus mehreren Fördersystemen aufgebauten Einheit zum Verpacken von Artikeln.

Figur 2 zeigt eine perspektivische Ansicht einer Einrichtung zum Verpacken von Artikeln, wobei hier die einzelnen Artikel zur besseren Darstellung der Einrichtung weggelassen sind.

Figur 3 zeigt eine Seitenansicht eines Moduls des Fördersystems.

Figur 4 zeigt eine perspektivische Ansicht eines Moduls des erfindungsgemäßen Fördersystems.

Figur 5 zeigt eine perspektivische Teilansicht der Einrichtung, bei der die Transportschienen für die Aufnahmen der Artikel dargestellt sind.

Figur 6 zeigt eine perspektivische Ansicht einer Aufnahme, die mit der Transportspur in Wirkzusammenhang bringbar ist.

Figur 7 zeigt eine perspektivische Ansicht eines Rastelements, das in der hier dargestellten Ausführungsform als Zahnstange ausgebildet ist, die mit der entsprechenden Transportspur in Wirkzusammenhang treten kann, damit die Aufnahme in Transportrichtung durch die Einrichtung bewegt werden kann.

Figur 8a zeigt eine Ausführungsform des Rastelements, das sich in der Phase der Annäherung an die Transportspur befindet, um mit dieser verbunden zu werden.

Figur 8b zeigt die in Figur 8a dargestellte Ausführungsform des Rastelements, wobei das Rastelement durch die besondere Ausgestaltung der Zahnstange eine Ausrichtung in Bezug auf die Transportspur erfährt.

Für gleiche oder gleich wirkende Elemente der Erfindung werden identische Bezugszeichen verwendet. Ferner werden der Übersicht halber nur Bezugszeichen in den einzelnen Figuren verwendet, die für die Beschreibung der jeweiligen Figur erforderlich sind. Die dargestellten Ausführungsformen stellen lediglich Beispiele dar, wie die erfindungsgemäße Einrichtung ausgestaltet sein kann und stellen somit keine abschließende Beschränkung der Erfindung dar.

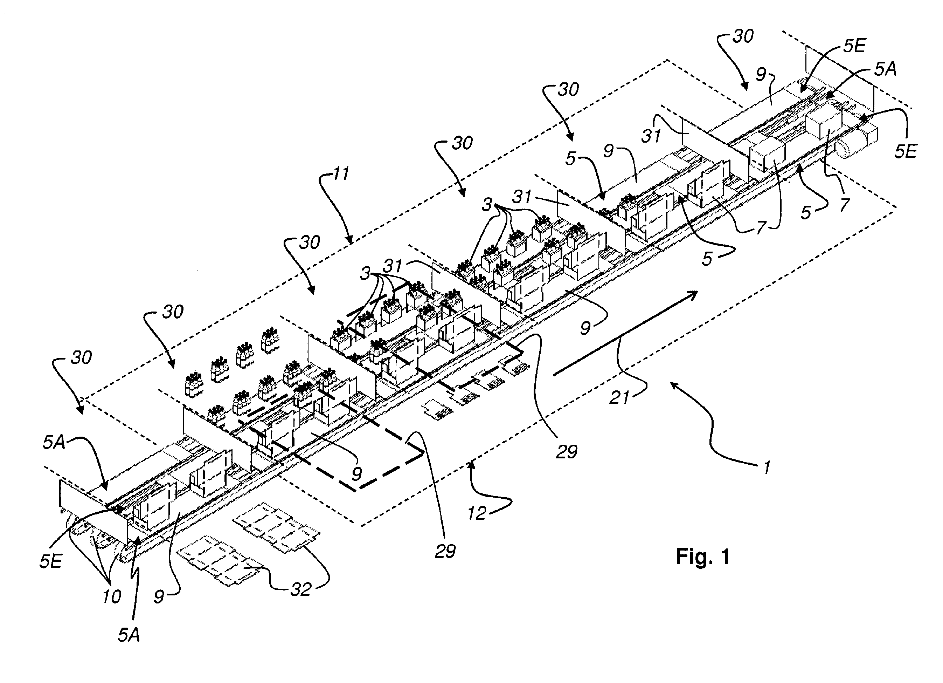

**Figur 1** zeigt eine perspektivische Ansicht der Einrichtung 1 zum Transport von Artikeln 3. Diese Einrichtung 1 kann z. B. in einer Verpackungsmaschine Verwendung finden. In der hier gezeigten Darstellung sind drei Fördersysteme 5 parallel zueinander angeordnet. Bei der in Figur 1 gezeigten Anordnung sind die einzelnen Fördersysteme 5 derart parallel zueinander angeordnet, dass die eine Transportrichtung 21 der einzelnen Fördersysteme 5 abwechselnd gegenläufig ist. Bei der hier dargestellten Ausführungsform laufen zwei der Fördersysteme 5 in die gleiche Richtung. Das dritte der Fördersysteme 5 kann dabei in der entgegengesetzten Richtung angetrieben werden, um zu verarbeitende Artikel zuzuliefern.

Es ist für einen Fachmann selbstverständlich, dass die in Figur 1 gezeigte Ausführungsform lediglich eine von vielen Anordnungsmöglichkeiten ist. Je nach der gestellten Problematik, wie die Artikel 3 mit Hilfe der Einrichtung 1 verpackt werden sollen, kann die Anordnung und die Transportrichtung 21 der einzelnen Fördersysteme gestaltet sein.

Auf jedem Fördersystem 5 sind mehrere Aufnahmen 9 angebracht, die entlang einer gewählten Transportrichtung 21 mittels einer umlaufenden Transportspur 10 für jedes einzelne Fördersystem 5 bewegt werden können. Durch Trennwände 31 sind die einzelnen Bearbeitungsstationen 30 angedeutet, an denen die Artikel von der Bearbeitungsstation z. B. auf die einzelnen Fördersysteme 5 übergesetzt werden können. Hierzu kann an den Bearbeitungsstationen 30 ein Roboter 29 vorgesehen sein, der alle Fördersysteme 5 oder nur die zwei Fördersysteme 5, die in der gleichen Transportrichtung 21 laufen, übergreift.

Zur Ausführung der Bearbeitung werden die Fördersysteme 5 getaktet angetrieben. Dies bedeutet, dass dasjenige Fördersystem 5 steht an dem die Bearbeitung durchgeführt wird. Dies erfolgt zwischen den einzelnen Fördersystemen 5 entsprechend abwechselnd. Ebenso ist es möglich, dass an der Bearbeitungsstation 30 die einzelnen Artikel 3 in vorgefertigte Behälter 7 gesetzt werden können. So werden an der Bearbeitungsstation 30, die dem Anfang 5A des Fördersystems 5 folgt, die zweidimensionalen Zuschnitte 32 für die Verpackungen 7 zur Verfügung gestellt. In der darauf folgenden Arbeitsstation 30 werden in der hier dargestellten Ausführungsform die zu Sechsergruppen zusammengestellten Artikel, hier Flaschen, auf das Fördersystem 5 übergesetzt. In einer nächsten Arbeitsstation können z. B. die Sechsergruppen weiterhin mit einer Umhüllung versehen werden. Darauf folgend ist es denkbar, dass die Sechsergruppen mit ihrer Umhüllung in die dafür vorgesehenen Verpackungen 7 überführt werden. In der Regel werden mehrere der zusammengefassten Sechsergruppen in die dafür vorgesehenen Verpackungen eingesetzt. Bei der letzten Arbeitsstation 30, die sich vor dem Ende 5E des Fördersystems 5 befindet, werden letztendlich die Verpackungen 7 verschlossen. An dieser letzten Arbeitsstation 30 können die Verpackungen 7 von dem Fördersystem 5 abgenommen werden und einer weiteren Verarbeitungseinheit (hier nicht dargestellt) zugeführt werden.

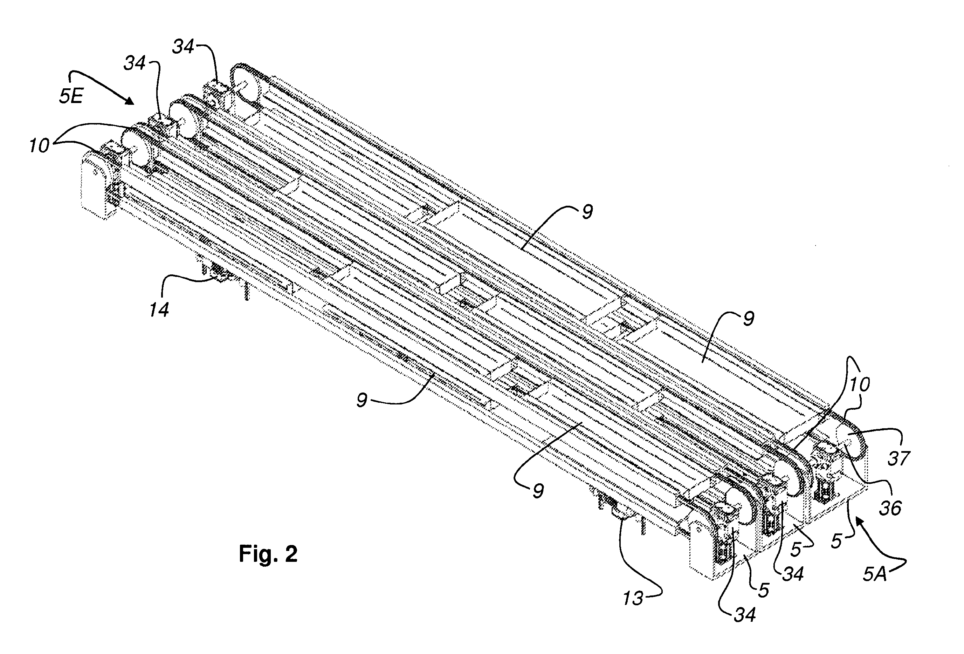

**Figur 2** zeigt eine vereinfachte perspektivische Darstellung, bei der ebenfalls drei Fördersysteme 5 parallel zueinander angeordnet sind und somit die erfindungsgemäße Einheit bilden. Die Anzahl der Fördersysteme 5, welche modular zu einer Einheit zum Transport von zu verpackenden Artikeln zusammengestellt werden können, sollen nicht als eine Beschränkung der Erfindung aufgefasst werden. Es ist für einen Fachmann selbstverständlich, dass je nach Bedarf die Anzahl der Fördersysteme 5 zusammengeschaltet werden können. Ebenso ist es selbstverständlich, dass sich die Länge der einzelnen Fördersysteme 5 an die Anforderungen der Benutzer richtet. In der hier gezeigten Darstellung besitzt jedes Fördersystem 5 am Anfang 5A und am Ende 5E jeweils einen Motor 34, der eine Achse 36 antreibt, die beidseitig jeweils ein Zahnrad 37 trägt. Über die am Anfang 5A und am Ende 5E vorgesehenen Zahnradpaare wird jeweils eine Transportspur 10, welche in Form einer Kette ausgebildet ist, endlos geführt. Mit der Transportspur 10 ist die Aufnahme 9 in Wirkzusammenhang, so dass sie entsprechend der vorgesehenen Transportrichtung 21 der oberen Ebene transportiert werden können. Ebenso ist aus der in Figur 2 gezeigten Darstellung zu erkennen, dass an eine erste Hubeinheit 13 der Umfang eines jeden Fördersystems 5 zugeordnet ist. Ebenso ist an jedem Ende 5E eines jeden Fördersystems 5 eine Hubeinheit 14 vorgesehen. In den nachfolgenden Figuren wird die Funktionsweise dieser Hubeinheit näher beschrieben.

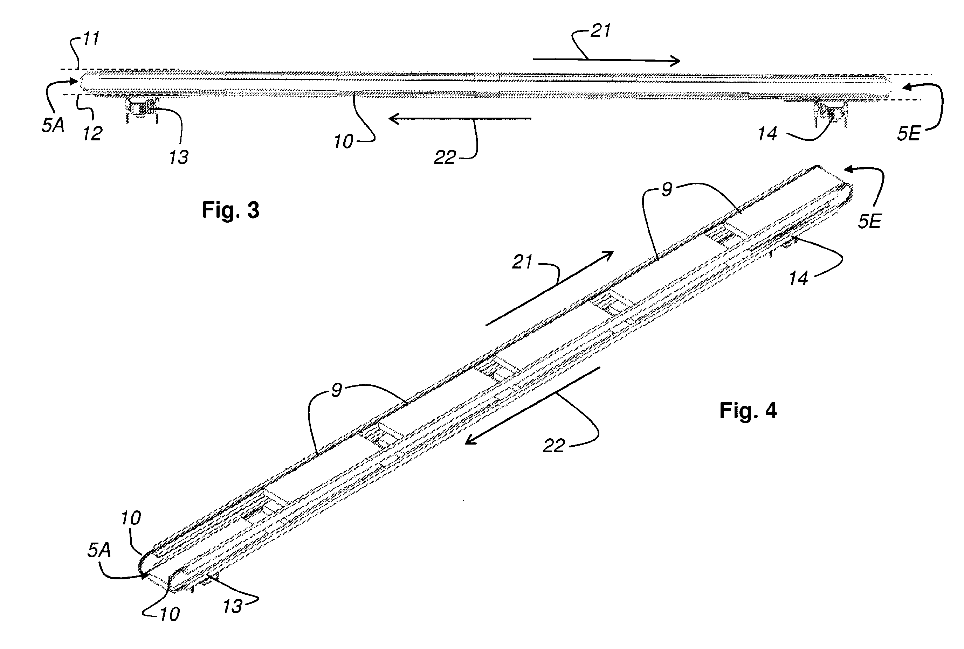

**Figur 3** zeigt eine Seitenansicht eines Moduls des erfindungsgemäßen Fördersystems 5. Das erfindungsgemäße Fördersystem 5 besitzt eine obere Ebene 11 und eine untere Ebene 12. Wie bereits erwähnt, ist dem Anfang 5A des Fördersystems 5 eine erste Hubeinheit 13 zugeordnet. Dem Ende 5E des Fördersystems 5 ist ebenfalls eine zweite Hubeinheit 14 zugeordnet. Das Fördersystem trägt mehrere Aufnahmen 9, die in der in Figur 3 gezeigten Darstellung eine Transportrichtung 21 aufweisen, die vom Anfang 5A des Fördersystems 5 zum Ende 5E des Fördersystems 5 gerichtet ist. Aufgrund der endlos umlaufenden Transportspur 10 ist die Transportrichtung 22 an der unteren Ebene 12 des Fördersystems entgegen der Transportrichtung 21 der oberen Ebene gerichtet. Am Ende 5E des Fördersystems 5 werden die Aufnahmen durch die Hubeinheit von der oberen Ebene 11 auf die untere Ebene abgesenkt. Dazu werden die Aufnahmen 9 von der Transportspur entkoppelt und nach dem Absenken durch die zweite Hubeinheit 14 wieder an die Transportspur 10 angekoppelt. Am Anfang 5A des Fördersystems werden mit der ersten Hubeinheit die durch die Transportspur entlang der Förderrichtung 22 angelieferten Aufnahmen von der Transportspur entkoppelt und mit der zweiten Hubeinheit 13 auf die obere Ebene 12 gehoben. Dort wird dann die Aufnahme wieder an die Transportspur 10 angekoppelt.

**Figur 4** zeigt eine perspektivische Ansicht eines Moduls des erfindungsgemäßen Fördersystems 5. In der hier gezeigten Situation wurde gerade eine Aufnahme 9 entlang der unteren Ebene 12 durch die Transportrichtung 22 zum Anfang 5A des Fördersystems 5 transportiert. Diese Aufnahme 9 ist jedoch noch nicht auf die obere Ebene 11 des Fördersystems angehoben worden. Entsprechend befindet sich eine Aufnahme 9 am Ende 5E des Fördersystems 5. Diese Aufnahme 9 gilt es noch mit der zweiten Hubeinheit 14 auf die untere Ebene 12 abzusenken und dort an die Transportspuren 10 anzukoppeln.

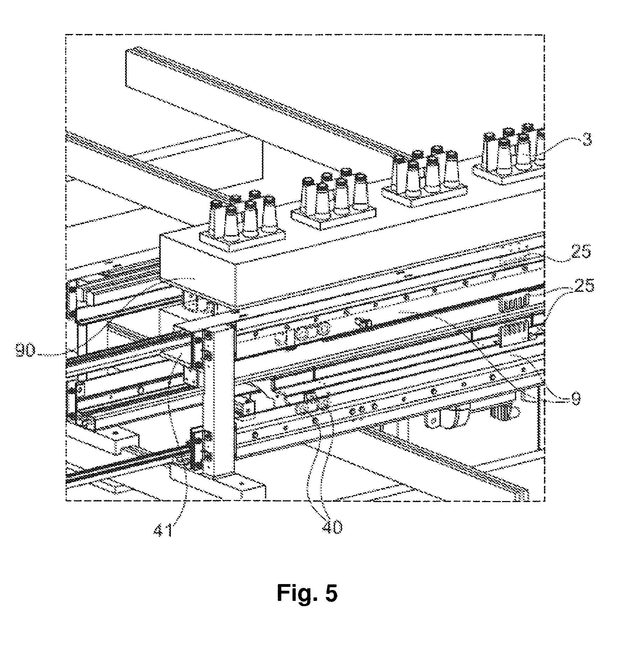

**Figur 5** zeigt eine perspektivische Teilansicht der erfindungsgemäßen Vorrichtung, bei der in einer Aufnahme 9 mehrere Artikel 5 bereits zu einem Gebinde 50 zusammengefasst worden sind. Diese Gebinde 50 werden mit der Aufnahme 9 zu einer nachfolgenden Verarbeitungsstation transportiert. Wie aus der Figur 5 zu erkennen ist, besitzen die Aufnahmen 9 Rastelemente 25, die in Richtung der oberen Ebene 11 und der unteren Ebene 12 gerichtet sind. Wie bereits erwähnt, wirken die Rastelemente 25 mit der Transportspur 10 zusammen, so dass aufgrund dieser Zusammenwirkung der Transport der Aufnahmen bewirkt werden kann. In der hier dargestellten Ausführungsform sind auf den Aufnahmen 9 Wannen 90 aufgesetzt, in denen die zu verarbeitenden oder bearbeitenden Artikel 3 bzw. Gebinde abgesetzt werden können. Ebenso sind parallele Schienen 41 vorgesehen, in denen die mit Rollen 40 versehenen Aufnahmen 9 geführt sind.

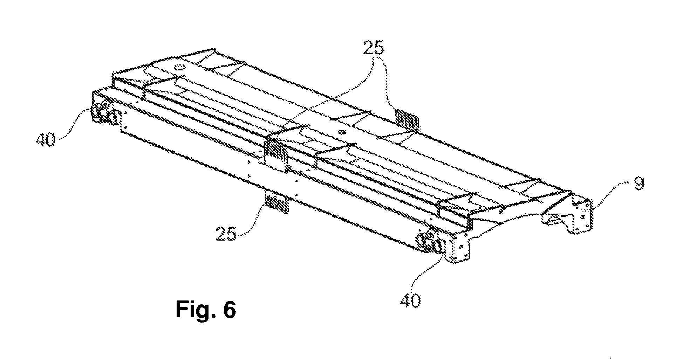

**Figur 6** zeigt eine perspektivische Detailansicht einer Aufnahme 9, die in der erfindungsgemäßen Einrichtung Verwendung findet. An den beiden Enden weist die Aufnahme 9 Rollen 25 auf, die zur Führung der Aufnahme in den dafür vorgesehenen Schienen 41 angebracht sind. In der Mitte der Aufnahme 9 sind die Rastelemente 25 angebracht, die mit der jeweiligen Transportspur 10 bzw. der als Kette ausgebildeten Transportspur in Wirkzusammenhang treten. Wie bereits in der Beschreibung zu Figur 5 erwähnt, kann auf die Aufnahme 9 ein Tablett oder eine Wanne oder ein ähnliches Gebilde aufgesetzt werden, auf dem letztendlich die zu verarbeitenden Artikel bzw. Verpackungen mit der erfindungsgemäßen Einrichtung transportiert werden können.

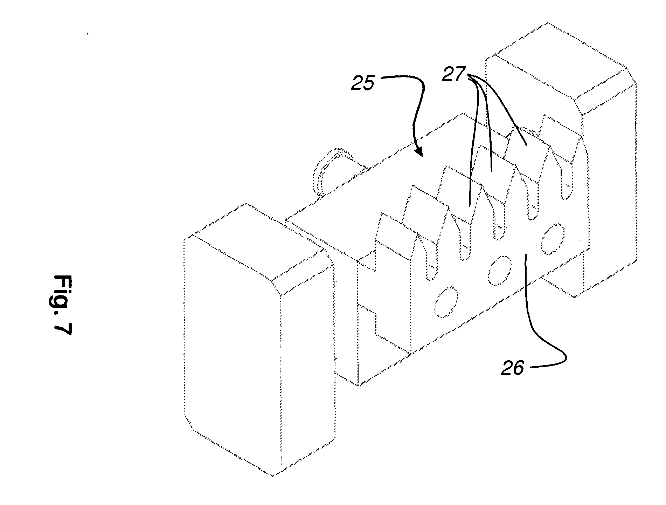

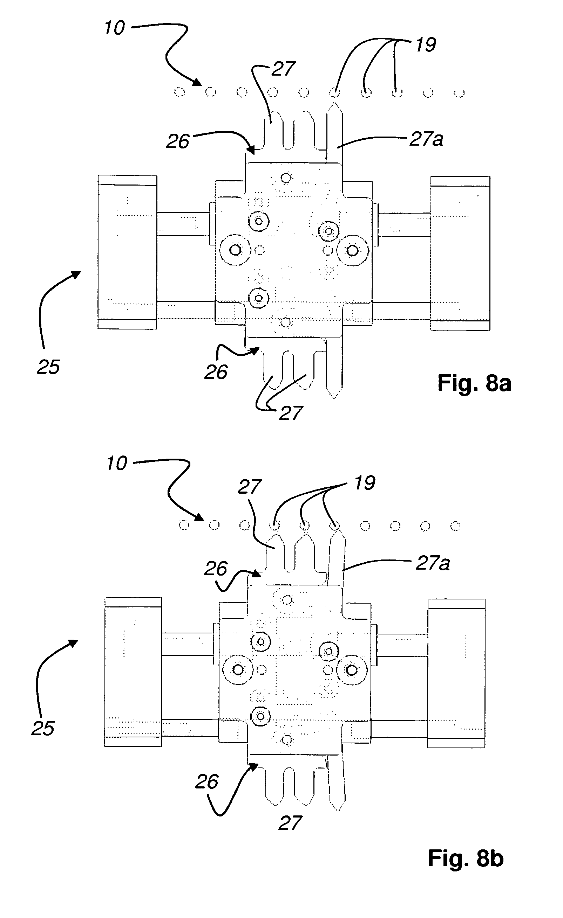

**Figur 7** zeigt eine perspektivische Detailansicht einer Ausführungsform eines Rastelements 25, das mit der Transportspur 10 zum Transport der Aufnahme 9 in Wirkzusammenhang tritt. Das Rastelement 25 ist, wie aus Figur 6 ersichtlich, an der Aufnahme 9 befestigt. Damit das Rastelement 25 mit der Transportspur 10 in Wirkzusammenhang treten kann, ist eine Zahnstange 26 am Rastelement 25 ausgebildet. Diese Zahnstange 26 rastet in die als Kette ausgebildete Transportspur 10 ein und bewirkt somit den Transport der Aufnahmen in der Transportrichtung 21 in der oberen Ebene oder in der Transportrichtung 22 in der unteren Ebene des Fördersystems 5. Die Transportspur 10 umfasst eine Vielzahl von beabstandeten Kettengliederstegen 19 (siehe Figur 8a und 8b), in deren Zwischenräume die einzelnen Zähne 27 der Zahnstange 26 des Rastelements 25 eingreifen. Somit kann eine automatische Ausrichtung der jeweiligen Aufnahme 9 in Bezug auf die Transportkette erfolgen.

Figur 8a zeigt eine weitere Ausführungsform des Rastelements 25, das sich in der Phase der Annäherung an die Transportspur 10 befindet, um mit dieser für den Transport verbunden zu werden. Das Rastelement 25 besitzt ebenfalls eine Zahnstange 26 mit mehreren Zähnen 27. Bei der in Figur 8a dargestellten Situation wird die Aufnahme 9 und folglich auch das Rastelement 25 angehoben. Die Zähne 27 und 27a treffen dabei zufällig auf die Kettengliederstege 19 der Transportstur 10. Ein Zahn 27a der Zahnstange 26 ist schwenkbar ausgebildet, um somit den Eingriff der Zahnstange 26 zwischen die Kettengliederstege 19 der Transportstur 10 zu erleichtern.

Figur 8b zeigt die in Figur 8a dargestellte Ausführungsform des Rastelements, wobei das Rastelement 25 durch die besondere Ausgestaltung des beweglichen Zahns 27a der Zahnstange 26 eine Ausrichtung in Bezug auf die Transportspur 10 erfährt. Der schwenkbar ausgebildete Zahn 27a der Zahnstange 26 weicht den Kettengliederstegen 19 aus und führt somit alle Zähne 27 und 27a der Zahnstange 26 des Rastelements 22 in die Abstände der Kettengliederstege 19 der Transportspur 10. Somit erzielt man eine automatische Ausrichtung der Aufnahmen 9 mit den Kettengliederstegen 19 der Transportspur 10.

Der schwenkbar ausgebildete Zahn 27a ist nicht für eine Klemmung vorgesehen. Er dient als Einführhilfe für die Zahnstange 27 in die als Kette ausgebildete Transportspur 10 Wenn die jeweilige Aufnahme 9 sich in der ausgerichteten Position befindet und die Kettengliederstege 19 in den Zwischenräumen zwischen den Zähnen 27 und 27a der Zahnstange 26 des Rastelements sitzen, kann geklemmt werden Die Aufnahmen 9 erhalten somit eine exakte Positionierung zu der als Kette ausgebildeten Transportspur 10.

Die Erfindung wurde unter Bezugnahme auf bevorzugte Ausführungsformen beschrieben. Es ist jedoch für einen Fachmann selbstverständlich, dass Abwandlungen und Änderungen gemacht werden können, ohne dabei den Schutzbereich der nachfolgenden Ansprüche zu verlassen.

## Patentansprüche

1. Einrichtung (1) zum Transport von Artikeln (3) in einer Verpackungsmaschine, wobei mindestens zwei parallele Fördersysteme (5) für die zu verpackenden Artikel (3) oder die Verpackungen (7) für die zu verpackenden Artikel (3) vorgesehen sind, wobei jedes Fördersystem (5) aus einer endlos umlaufenden Transportspur (10) gebildet ist und wobei jedes Fördersystem (5) einen Anfang (5A) und ein Ende (5E) umfasst, dass entlang der mindestens zwei Fördersysteme (5) in der Verpackungsmaschine mehrere Bearbeitungsstationen (30) vorgesehen sind, von denen mindestens einer Bearbeitungsstation (30) ein Roboter zugeordnet ist, der die mindestens zwei Fördersysteme (5) übergreift, dass jedes der Fördersysteme (5) mehrere Aufnahmen (9) trägt, die mit der jeweiligen Transportspur (10) kraftschlüssig verbindbar sind, wobei jedes Fördersystem (5) eine obere Ebene (11) und eine untere Ebene (12) ausgebildet hat und dass jedem Fördersystem (5) am Anfang (5A) eine erste Hubeinheit (13) und am Ende (5E) eine zweite Hubeinheit (14) zugeordnet ist, die die Aufnahmen (9) am Anfang (5A) und am Ende (5E) des Fördersystems (5) zwischen der oberen Ebene (11) und der unteren Ebene (12) verschieben.

2. Einrichtung (1) nach Anspruch 1, **dadurch gekennzeichnet, dass** für die mindestens zwei parallel zueinander angeordneten Fördersysteme (5) für die zu verpackenden Artikel (3) oder die Verpackungen (7) eine Transportrichtung (21) der mindestens zwei Fördersysteme (5) in Bezug auf die obere Ebene (11) abwechselnd gegenläufig ist.

3. Einrichtung (1) nach den vorangehenden Ansprüchen , **dadurch gekennzeichnet, dass** ein Antrieb der beiden Fördersysteme (5) abwechselnd getaktet erfolgt, wobei die Aufnahmen (9) an den mehreren Bearbeitungsstationen (30) für eine vordefinierte Zeit verweilen, damit vom Roboter (29) der Bearbeitungsstation (30) die Bearbeitung an dem gerade nicht angetriebenen Fördersystem (5) abschließbar ist.

4. Einrichtung (1) nach einem der Ansprüche 1 bis 3, **dadurch gekennzeichnet, dass** jedes Fördersystem (5) auf der oberen Ebene (11) eine Transportrichtung (21) ausgebildet hat und die Aufnahmen (9) vom Anfang (5A) zum Ende (5B) hin transportiert und dass auf der unteren Ebene (12) eine entgegensetzte Transportrichtung (22) ausgebildet ist, die die Aufnahmen (9) zurück zum Anfang (5A) des Fördersystems (5) bringt.

5. Einrichtung nach den Ansprüchen 1 bis 4, **dadurch gekennzeichnet, dass** die Transportspur (10) aus mindestens einer endlosen Kette mit einer Vielzahl von Kettengliederstegen (19) gebildet ist, mit der die Aufnahmen (9) während der Bewegung der Transportspur (10) fest verbunden sind, wobei am Anfang (5A) und am Ende (5E) des Fördersystems (5) die Aufnahmen (9) in die Transportspur (10) einkoppelbar bzw. aus der Transportspur (10) entkoppelbar sind und dass beim Einkoppeln der Aufnahmen (9) in die Transportspur (10) die Aufnahmen (9) automatisch in Bezug auf die Transportspur (10) ausrichtbar sind.

6. Einrichtung (1) nach einem der Ansprüche 1 bis 5, **dadurch gekennzeichnet, dass** die Aufnahmen (9) mehrere Rastelemente (25) aufweisen, die in Richtung der oberen Ebene (11) bzw. unteren Ebene (12) des Fördersystems (5) mit der Transportspur (10) bei Bedarf in Wirkzusammenhang bringbar sind.

7. Einrichtung (1) nach Anspruch 6, **dadurch gekennzeichnet, dass** die Rastelemente (25) jeweils als paarweise gegenüberstehende Zahnstangen (26) ausgebildet sind, die mehrere Zähne (27) ausgebildet haben, die je nach Position der Aufnahmen (9) in die als Kette ausgebildete Transportspur (10) eingreifen und sich in Bezug auf die Kettengliederstege (19) der Transportspur (10) ausrichten.

8. Einrichtung (1) nach Anspruch 7, **dadurch gekennzeichnet, dass** ein Zahn (27a) der Zahnstange (26) schwenkbar ausgebildet ist, um die automatische Ausrichtung der Aufnahmen (9) mit den Kettengliederstegen (19) der Transportspur (10) herzustellen.

9. Einrichtung (1) nach Anspruch 8, **dadurch gekennzeichnet, dass** der schwenkbar ausgebildete Zahn (27a) eine Einführfunktion für das Rastelements (25) hat wenn die Zähne (27) der jeweilige Aufnahme (9) in Position mit dem Kettengliederstegen (19) stehen.

10. Einrichtung nach einem der Ansprüche 6 bis 9, **dadurch gekennzeichnet, dass** bei der durch Klemmung der Zahnstange (26) bewirkten Ausrichtung der Aufnahmen (9) die Zähne(27, 27a) der Zahnstange (26) zwischen in Zwischenräumen der Kettengliederstege (19) angeordnet sind.

11. Einrichtung (1) nach einem der Ansprüche 1 bis 10, **dadurch gekennzeichnet, dass** die Einrichtung (1) aus mehreren der einzelnen Fördersysteme (5) modular aufgebaut ist.

## Claims

1. Equipment (1) for transporting articles (3) in a packaging machine, wherein at least two parallel conveyor systems (5) for the articles (3) to be packed or the packagings (7) for the articles (3) to be packed are provided, wherein
each conveyor system (5) is formed from a continuously circulating transport track (10),
each conveyor system (5) includes a beginning (5A) and an end (5E),
a plurality of processing stations (30) is provided along the at least two conveyor systems (5) in the packaging machine,
at least one of the processing stations (30) is assigned to a robot which reaches over the at least two conveyor systems (5),
each of the conveyor systems (5) carries a plurality of receptacles (9) which are connectable in a force-fitting manner with the respective transport track (10), and
each conveyor system (5) has an upper level (11) and a lower level (12) and each conveyor system (5) is assigned at the beginning (5A) to a first lifting unit (13) and at the end (5E) to a second lifting unit (14) which move the receptacles (9) at the beginning (5A) and at the end (5E) of the conveyor system (5) between the upper level (11) and the lower level (12).

2. The equipment (1) according to Claim 1, **characterized in that**, for the at least two conveyor systems (5) arranged in parallel to each other for the articles (3) to be packed or the packagings (7), a direction of transport (21) for the at least two conveyor systems (5) is alternately antagonistic with reference to the upper level (11).

3. The equipment (1) according to the preceding claims, **characterized in that** a drive for both conveyor systems (5) occurs alternately clocked, wherein the receptacles (9) dwell for a pre-defined period of time at the plurality of processing stations (30), so that the processing at the currently undriven conveyor system (5) is completable by the robot (29) of the processing station (30).

4. The equipment (1) according to any one of Claims 1 to 3, **characterized in that** every conveyor system (5) has a direction of transport (21) on the upper level (11) and the receptacles (9) are transported from the beginning (5A) to the end (5B) and **in that** an opposite direction of transport (22) is realized on the lower level (12) which opposite direction of transport (22) brings the receptacles (9) back to the beginning (5A) of the conveyor system (5).

5. The equipment (1) according to Claims 1 to 4, **characterized in that** the transport track (10) is formed out of at least one endless chain with a plurality of chain link webs (19) with which the receptacles (9) are firmly connected during movement of the transport track (10), wherein the receptacles (9) can be coupled into the transport track (10) or uncoupled from the transport track (10) at the beginning (5A) and at the end (5E) of the conveyor system (5) and **in that**, upon coupling of the receptacles (9) into the transport track (10), the receptacles (9) are automatically alignable relative to the transport track (10).

6. The equipment (1) according to any one of Claims 1 to 5, **characterized in that** the receptacles (9) have a plurality of snap-in elements (25) which can be brought, as required, into cooperative relationship with the transport track (10) in the direction of the upper level (11) or lower level (12) of the conveyor system (5).

7. The equipment (1) according to Claim 6, **characterized in that** the snap-in elements (25) are respectively formed as opposing toothed racks (26) in pairs which are designed with a plurality of teeth (27) which engage, depending on the position of the receptacles (9), in the transport track (10) designed as a chain and which align relative to the chain link webs (19) of the transport track (10).

8. The equipment (1) according to Claim 7, **characterized in that** a tooth (27a) of the toothed rack (26) is designed to swivel in order to create the automatic alignment of the receptacles (9) with the chain link webs (19) of the transport track (10).

9. The equipment (1) according to Claim 8, **characterized in that** the swivelable tooth (27a) has an insertion function for the snap-in element (25) if the teeth (27) of the respective receptacle (9) stand in position with the chain link webs (19).

10. The equipment (1) according to any one of Claims 6 to 9, **characterized in that**, for alignment of the receptacles (9) achieved through clamping of the toothed rack (26), the teeth (27, 27a) of the toothed rack (26) are arranged inbetween in the intermediate spaces of the chain link webs (19).

11. The equipment (1) according to any one of Claims 1 to 10, **characterized in that** the equipment (1) is constructed in a modular fashion out of a plurality of individual conveyor systems (5).

## Revendications

1. Équipement (1) pour le transport d'articles (3) dans une machine d'emballage, étant donné que sont prévus au moins deux systèmes de manutention (5) parallèles pour les articles à emballer (3) ou les emballages (7) pour les articles à emballer (3), étant donné que chaque système de manutention (5) est formé à partir d'une piste de transport (10) circulante continue et étant donné que chaque système de manutention (5) comprend un début (5A) et une fin (5E), que sont prévus le long des au moins deux systèmes de manutention (5) dans la machine d'emballage une pluralité de stations de traitement (30) dont au moins une station de traitement (30) est affectée à un robot qui chevauche les au moins deux systèmes de manutention (5), que chacun des systèmes de manutention (5) porte une pluralité de réceptacles (9) qui peuvent être raccordés, entraînés par adhérence, avec la piste de transport (10) respective, étant donné que chaque système de manutention (5) a formé un plan supérieur (11) et un plan inférieur (12) et que chaque système de manutention (5) est affecté au début (5A) à une première unité de levage (13) et à la fin (5E) à une deuxième unité de levage (14) qui déplacent les réceptacles (9) au début (5A) et à la fin (5E) du système de manutention (5) entre le plan supérieur (11) et le plan inférieur (12).

2. Équipement (1) selon la revendication 1, **caractérisé en ce que**, pour les au moins deux systèmes de manutention (5) disposés parallèlement l'un par rapport à l'autre pour les articles à emballer (3) ou les emballages (7), un sens de transport (21) des au moins deux systèmes de manutention (5) est à tour de rôle antagoniste par rapport au plan supérieur (11).

3. Équipement (1) selon les revendications précédentes, **caractérisé en ce qu'**un entraînement des deux systèmes de manutention (5) est à tour de rôle cadencé, étant donné que les réceptacles (9) restent à la pluralité de stations de traitement (30) pendant une durée prédéfinie afin que le robot (29) de la station de traitement (30) puisse achever le traitement au système de manutention (5) qui n'est actuellement pas entraîné.

4. Équipement (1) selon l'une quelconque des revendications 1 à 3, **caractérisé en ce que** chaque système de manutention (5) a formé sur le plan supérieur (11) un sens de transport (21) et transporte les réceptacles (9) du début (5A) à la fin (5B) et **en ce qu'**est formé sur le plan inférieur (12) un sens de transport (22) opposé qui ramène les réceptacles (9) au début (5A) du système de manutention (5).

5. Équipement selon les revendications 1 à 4, **caractérisé en ce que** la piste de transport (10) est formée par au moins une chaîne continue avec une pluralité d'étais de maillons de chaîne (19), chaîne continue avec laquelle les réceptacles (9) sont fermement raccordés pendant le mouvement de la piste de transport (10), étant donné que, au début (5A) et à la fin (5E) du système de manutention (5), les réceptacles (9) peuvent être couplés dans la piste de transport (10) ou découplés de la piste de transport (10) et **en ce que**, lors du couplage des réceptacles (9) dans la piste de transport (10), les réceptacles (9) peuvent être alignés automatiquement par rapport à la piste de transport (10).

6. Équipement (1) selon l'une quelconque des revendications 1 à 5, **caractérisé en ce que** les réceptacles (9) présentent une pluralité d'éléments à cran d'arrêt (25) qui peuvent, en cas de besoin, être mis en relation fonctionnelle dans le sens du plan supérieur (11) ou du plan inférieur (12) du système de manutention (5) avec la piste de transport (10).

7. Équipement (1) selon la revendication 6, **caractérisé en ce que** les éléments à cran d'arrêt (25) sont respectivement formés comme crémaillères (26) opposées paire par paire qui ont formé une pluralité de dents (27) qui, en fonction de la position des réceptacles (9), prennent dans la piste de transport (10) formée comme chaîne et s'alignent par rapport aux étais de maillons de chaîne (19) de la piste de transport (10).

8. Équipement (1) selon la revendication 7, **caractérisé en ce qu'**une dent (27a) de la crémaillère (26) est pivotante afin de réaliser l'alignement automatique des réceptacles (9) avec les étais de maillons de chaîne (19) de la piste de transport (10).

9. Équipement (1) selon la revendication 8, **caractérisé en ce que** la dent pivotante (27a) a une fonction d'introduction pour l'élément à cran d'arrêt (25) lorsque les dents (27) du réceptacle (9) respectif sont en position avec les étais de maillons de chaîne (19).

10. Équipement selon l'une quelconque des revendications 6 à 9, **caractérisé en ce que**, lors de l'alignement des réceptacles (9) causé par le serrage de la crémaillère (26), les dents (27, 27a) de la crémaillère (26) sont disposées dans les espaces intermédiaires entre les étais de maillons de chaîne (19).

11. Équipement (1) selon l'une quelconque des revendications 1 à 10, **caractérisé en ce que** l'équipement (1) a une structure modulaire composée de plusieurs des systèmes de manutention (5) individuels.
